# EUROPEAN PATENT APPLICATION

(11) **EP 4 299 259 A1**
(43) Date of publication of application: **03.01.2024**
(21) Application number: 23178168.3
(22) Date of filing: 08.06.2023
(51) Int. Cl.: B25J 15/04, B25J 9/16, B25J 19/00

(54) **SAFETY CONTROL APPARATUS FOR TOOL CHANGING DEVICE OF A ROBOTIC ARM**

(30) Priority: 20.06.2022 IT 202200012976
(71) Applicant: Effecto Group S.p.A., 20154 Milano (IT)
(72) Inventor: PATRINI, Giovanni, 26013 CREMA (IT)
(74) Representative: Corradini, Corrado

(57) **Abstract**

A safety control apparatus (100) for a tool changing device of a robotic arm is described, said apparatus being configured to allow the decoupling or the coupling between robotic arm (5) and tool (6) safely. The safety control apparatus comprises:
- a first module (101) associated with the robotic arm,
- a second module (102) associated with the tool and comprising storage means (110) in which at least one safety signal (S, UID, PR) is stored,
- means (103) associated with a tool parking station (30) adapted to prevent or allow the activation of said second module, said second module, once activated, being configured to wirelessly transmit said at least one safety signal to the first module, said first module being configured to allow the decoupling or the coupling between robotic arm and tool in response to the reception of said at least one safety signal.

## Description

### TECHNICAL FIELD

The present invention relates to the field of robotics and industrial automation, in particular to tool changing devices particularly adapted to be coupled with a robotic arm. The present invention was developed with particular reference to a safety control apparatus for a tool changing device of a robotic arm.

### PRIOR ART

Robotised islands are known in the state of the art which are sets of machines comprising one or more industrial robots, i.e. manipulators, for various uses, automatically controlled and programmable so that they perform movements on three or more axes.

Their use is increasingly widespread in many different industrial applications, from logistics to painting, assembly, painting, welding, etc. Within these islands, the need therefore arises for a robot or a manipulator to have the possibility to use several tools in order to perform different functions, i.e. for the robot or manipulator to be equipped with a tool changing device.

The tool changing system preferably comprises:
- A robot or a manipulator, either automatic or semi-automatic;
- A robot or machine adapter, adapted to be mechanically connected to the end of the robotic arm or manipulator;
- A tool adapter, adapted to be mechanically connected to the tool (e.g. for the machining or gripping or other);
- A parking station, adapted to safely receive the tool adapter, and therefore capable of accommodating the tool and mechanically ensuring its retention without the risk of falling.

The integration and installation of industrial robots and robotic equipment in production lines entails particular dangers. International standards have already identified these dangers and provide for a set of minimum safety requirements to be adopted by the players involved in a robotic system (manufacturer, supplier, integrator and user) in order to ensure a safe working environment.

The Holder has conducted numerous experiments and research and development activities in order to identify different solutions (mechanical, pneumatic and electrical) for tool changers in an automation application that ensure that the tool itself cannot be decoupled from the robotic arm or coupled to it unless one or more safety conditions are met and respected.

In virtue of the above, an object of the present invention is that of providing a solution to such needs.

In particular, an object of the present invention is that of providing a safety control apparatus for a tool changing device of a robotic arm that is more efficient and more reliable than those known.

Even more particularly, an object of the present invention is that of providing a safety control apparatus for a tool changing device of a robotic arm that is applicable to any tool changer size available on the market.

This and other objects are reached through the embodiment of the invention comprising the technical characteristics defined in the main claim. The dependent claims outline preferred and/or particularly advantageous aspects of the invention.

### DISCLOSURE OF THE INVENTION

In particular, the invention makes available a safety control apparatus for a tool changing device of a robotic arm, said apparatus being configured to allow the decoupling or the coupling between robotic arm and tool safely, characterized in that it comprises:
- a first module associated with the robotic arm,
- a second module associated with the tool and comprising storage means in which at least one safety signal is stored,
- means associated with a tool parking station adapted to prevent or allow the activation of said second module, said second module, once activated, being configured to wirelessly transmit said at least one safety signal to the first module, said first module being configured to allow the decoupling or the coupling between robotic arm and tool in response to the reception of said at least one safety signal.

This eliminates the wear and tear on the coupling means of the systems known and used to date and the need for maintenance.

Preferably, the at least one safety signal comprises a safety code in the form of a numerical or alphanumeric string.

Preferably, the storage means of the second module are configured to store at least one code with progressive number assigned to the tool; the at least one safety signal transmittable from the second module, once activated, to the first module wirelessly comprises said at least one code with progressive number assigned to the tool. This provides an additional code that allows to distinguish a tool from the other tools in the case where the number of tools is at least two and especially in the case where the number of tools exchanged is considerable, for example the number of tools coupled with the robot is greater than one.

Preferably, the at least one code with progressive number assigned to the tool is entered into said storage means by a user via an external communication module.

Preferably, the apparatus comprises a control circuit associated with said first module, said control circuit comprising a memory wherein said at least one safety signal is stored, said control circuit being configured to carry out an operation of verifying the match of said at least one safety signal coming from said second module and received from the first module with the at least one safety signal present in said memory of said control circuit and being configured to allow the decoupling or the coupling between robotic arm and tool after carrying out said verification operation and if said verification operation is positive.

Preferably the means associated with the parking station comprise a magnetic actuator and the second module comprises a magnetic sensor activatable by the magnetic actuator.

Preferably, the magnetic sensor comprises at least one electric switch commanded by the magnetic actuator to allow or prevent the activation of said second module.

Preferably the first module comprises an RFID reader and said second module comprises at least one RFID chip with associated memory containing said at least one safety signal. This allows even more wear and tear between the power supply components used and the need for their maintenance to be eliminated.

The invention also makes available a tool changing device for a robotic arm comprising the safety control apparatus defined above.

Preferably, the tool changing device comprises a robot adapter adapted to be connected with said robotic arm and a tool adapter adapted to be connected with said tool; the first module of the safety control device is arranged in the robot adapter and the second module is arranged in said tool adapter.

### BRIEF DESCRIPTION OF THE DRAWINGS

Further features and advantages of the invention will be more apparent after reading the following description provided by way of non-limiting example, with the aid of the accompanying drawings.
Figure 1 is a schematic side view of a tool changing device of a robotic arm with a safety control apparatus in accordance with the present invention;
Figure 2 is a schematic view of the safety control apparatus for the tool changing device of Figure 1 in accordance with an embodiment of the invention;
Figures 3a-3c show various configurations that can be assumed by the second module of the safety control apparatus of Figure 2;
Figures 4a-4c show various configurations that can be assumed by the second module of the safety control apparatus in accordance with a variant of the embodiment of the invention of Figure 2.

### BEST MODE TO IMPLEMENT THE INVENTION

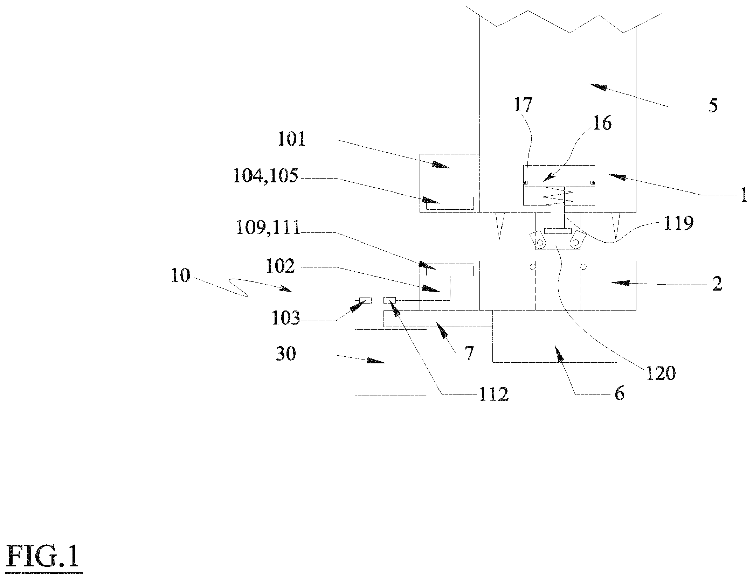

With particular reference to Figure 1, a tool changing device which can be activated for example by compressed air has been indicated globally with reference 10, and it comprises a robot adapter 1, particularly adapted to be connected to a robotic arm 5, and preferably a tool adapter 2, particularly adapted to be connected to a tool 6 and to a support, for example a plate or a shelf 7 for housing the tool 6 in a parking station 30. Robotic arm 5 refers to the arm of a robot or manipulator, either automatic or programmable.

Generally, a current tool changing device is preferably provided with a coupling unit that can firmly couple the robot adapter to the tool adapter.

This coupling unit can be arranged on the robot adapter or on the tool adapter. Preferably, but not necessarily, it is arranged on the robot adapter so as not to add to the costs of the obviously more numerous tool adapters in the application.

The coupling unit may comprise an active part and a passive part. The active part has at least one movable element for coupling the passive part; this creates a mechanically strong connection. Typically, a plurality of such movable elements is provided. The active part can be arranged on the robot adapter and the passive part on the tool adapter. Alternatively, the passive part is arranged on the robot adapter and the active part on the tool adapter. If the active and the passive part are provided, the adapter carrying the coupling unit should be the one that has the active, i.e. movable, part.

The coupling unit has a default state in which the device itself is coupled and in which it remains due to a coupling force.

The coupling unit can only be moved from the default state to the decoupling state when a decoupling force is provided.

It can be envisaged that the decoupling energy comprises pneumatic energy, a hydraulic energy and/or an electromagnetic energy, in particular an electrical energy, and consequently the decoupling force comprises a pneumatic force, and/or a hydraulic force and/or an electromagnetic force, in particular an electrical force.

If the pneumatic energy is used, the coupling unit can then be moved from its default state by compressed air supply. This allows using technologies often used in the field of industrial robots and automation, which can be easily supplied and are available for a reliable and fast switching of the coupling unit from the default state to the decoupling state.

In the case of pneumatic energy, an air pressure sensor is typically arranged in a particularly preferable manner between the supply entry point and the coupling unit and controls the compressed air supply. If this compressed air sensor detects a drop in the compressed air supply or its pressure falling, such that it indicates an insufficient coupling force, the compressed air sensor can output a warning signal for appropriate countermeasures to be taken. If other forms of energy are used, the sensor may also be an electromagnetic sensor and/or a hydraulic sensor for monitoring the supply of energy to the coupling unit.

Furthermore, it can be envisaged that the coupling energy and the coupling force and/or the closing energy and the closing force are caused by, i.e. mediated by, a spring. As a result, the coupling unit is retained in the default state by a mechanically exerted elastic force. The coupling force preferably results from a combination of the spring with a compressed air, or a hydraulic force or an electromagnetic force.

Other mechanical retention systems such as special profiles of the mechanical coupling elements (e.g. with mechanically irreversible profiles) may be alternative or additional to the spring.

Since two or more different mechanisms are provided for retaining the coupling unit in the coupling position, the coupling position is reliably maintained, even in the event of a component failure, e.g. in the event of a spring breaking or a compressed air drop. Of course only the spring force or only the compressed air or the hydraulic force or the electromagnetic force or only the mechanical elements can alternatively keep the coupling unit in the default state.

The decoupling energy is typically of the same type of energy as the coupling energy, but alternatively the two energies can also be of different types.

Safety conditions required to actuate the decoupling of a tool changer can for example be:
- when the tool changer is coupled with the tool (i.e. the robot adapter and the tool adapter are coupled) and it is in the parking station, or
- when it is not in the parking station (i.e. it is moving) and the tool adapter, fixed to the tool itself, is not coupled to the robot adapter (the robot adapter is not engaged). Typically, the tool changer decoupling commands are generated by an electronic controller, which is usually the one of the robot or of the machinery.

Regardless of the specific controller, the generation and the transmission of the decoupling commands are generally carefully controlled so that they are not inadvertently generated, causing an unsynchronised decoupling of the tool from the robot or manipulator arm.

However, due to the risk of software defects, human error and others, it is desirable to interpose an interlock or safety control in the decoupling circuit.

The need has therefore arisen for such automation equipment to be equipped with appropriate safety control systems provided with pneumatic or electrical controls or of any other type, which ensure that the release of unhookable tools only occurs in designated places or under specific and controlled conditions, so that the release cannot cause a dangerous situation.

Various types of safety control systems for tool changers applied to automation are known from the state of the art.

A first type is in the event that the decoupling energy is supplied from the robot to the tool changer coupling unit to activate its relative decoupling or unlocking.

In this case, pneumatic and/or electrical control systems are typically provided that allow the supply of this energy only under the safe conditions defined above, or rather that do not allow the supply of this energy under unsafe conditions. Said control systems must detect the coupling of the tool adapter to the robot adapter and/or the correct position of deposition of the tool adapter in a parking station.

This first type of tool changer safety control system, although very reliable and widely proven in various applications, is quite expensive and difficult to apply in tool changers that are of small capacity and small in size.

In addition, by providing for the use of pneumatic, hydraulic or electrical coupling means in contact, it is subject to wear and periodic maintenance to ensure production efficiency. A second type of tool changer control system provides for the supply of the decoupling energy from the parking station to the tool adapter by means of a supply device that supplies the decoupling energy to the tool adapter.

The supply device has a default state in which it is kept closed (i.e. cannot supply energy) by a closing force. Against the closing force, the supply device is activated into an open position after the tool adapter has been received in the parking station.

Since the supply device is now in an open position, the decoupling energy is conveyed to the coupling unit. This supply takes place via the parking station, the supply device and a coupling mean that connects the parking station directly or indirectly to the adapter carrying the coupling unit.

This ensures that the decoupling can occur in a safe situation when both adapters (robot and tool) are deposited in the parking station and the robot adapter is coupled to the tool adapter.

If the coupling unit is arranged on the robot adapter, a solution that is much more common in the state of the art due to its lower cost, the energy is transmitted from the tool adapter to the robot adapter via pneumatic or hydraulic or electric coupling means.

When the robot adapter is not coupled to the tool adapter, and must be brought into coupling in the parking station to pick up the tool, the coupling unit must be unlocked before the robot adapter engages the tool adapter. This results in the need for the mechanical extension of an energy supply coupling means (e.g. a valve) from the tool adapter to the robot adapter. This implies the need
- to detect the coupling of the robot adapter to the tool adapter so as not to activate the extension in this case;
- to detect the minimum distance required to supply the robot adapter;
- to mechanically guide the approach of the robot adapter to the tool adapter in a precise manner.

This can also result in the need to stop the movement of the robot or of the manipulator that moves the robot adapter towards the tool adapter, to allow the mechanical engagement of the energy coupling means, with consequent lengthening of the coupling time.

Finally, this second type of control does not improve the mechanical wear of the coupling means between the robot and the tool adapter and the necessary maintenance; on the contrary, it adds risks as these means have to be coupled at a certain distance.

The robot adapter 1 of Figure 1 comprises a pneumatic cylinder 17, preferably but not limited to a double-acting pneumatic cylinder, consisting of a cylinder, or pneumatic chamber, and of a piston 16 arranged slidingly within the cylinder. The piston 16 comprises a shaft 119 connected to an engagement element or coupling unit 120 particularly adapted to be engaged, at one end thereof, with the tool adapter 2. The pneumatic cylinder 17 is particularly adapted to activate a coupling/decoupling mechanism of the robotic arm 5, preferably of the robot adapter 1, with the tool 6, preferably with the tool adapter 2. The coupling unit 120, better referred to as the coupling/decoupling unit since it also allows the decoupling of the tool 2, preferably of the tool adapter 2, is preferably positioned on the robot adapter 1 and preferably comprises at least three movable coupling elements (not visible in the figures) assisted in retaining the tool adapter 2 coupled to the robot adapter 1 by a spring and possibly also by a coupling profile ensuring irreversibility in the coupling position.

The tool changer may of course also be manually, electrically, hydraulically, or otherwise operated, without thereby departing from the scope of the present invention.

In a tool changer operating condition, the tool 6 must be decoupled from the robotic arm 5, and a command signal must be sent to the pneumatic cylinder 17 which acts on the coupling/decoupling mechanism of the robotic arm 5, preferably of the robot adapter 1, with the tool 6, preferably with the tool adapter 2. In particular, it is necessary to send a command signal to one but preferably more pneumatic actuating valves V1, positioned on the robotic arm 5 or integrally with the robot adapter 1 or in a control module installed on the robot adapter 1 itself, which act on the pneumatic cylinder 17 which in turn acts on the coupling/decoupling unit 120. Hydraulic or electrical actuating devices arranged on the robotic arm 5 or associated with the robot adapter 1 can be envisaged as an alternative to the pneumatic actuating valves.

In the present invention, the command signal for decoupling or decoupling the tool changer can be transmitted to the pneumatic actuating valves V1 if and only if the tool adaptor 2 is deposited in the parking station 30 and at the same time the robot adaptor 1 is in the vicinity of the tool adapter 2, i.e. at a distance D1 comprised for example between 2 mm and 60 mm from the tool adapter 2.

In any other condition, a decoupling or decoupling command signal cannot be transmitted in any way to the pneumatic actuating valves V1.

This operation is made possible by an electronic type safety control apparatus 100 comprising a first module 101 associated with the robot arm 5, preferably arranged on the robot adapter 1, a second module 102 associated with the tool 6 but preferably arranged on the tool adapter 2 and means 103 associated with the parking station 30. Said safety control apparatus 100 is therefore configured to allow or prevent the decoupling or decoupling of the tool 6 from the robot arm 5, in particular of the tool adapter 2 from the robot adapter 1, in an unsafe manner or to allow the coupling between tool 6 and robotic arm 5. Said safety control apparatus 100 is activated when the robot arm 5, in particular the robot adapter 1, receives the decoupling or coupling command(s) from a control unit 150 of the robot arm 5 or of the manipulator; for example, the control unit 150 sends a signal Ssg, that is a control signal, to the first module 101 for the activation of the safety control apparatus 100.

The first 101 and the second 102 module exchange data with each other wirelessly. Preferably, the communication is in radio frequency, and especially, as is best preferred in an industrial environment, a HF or UHF communication.

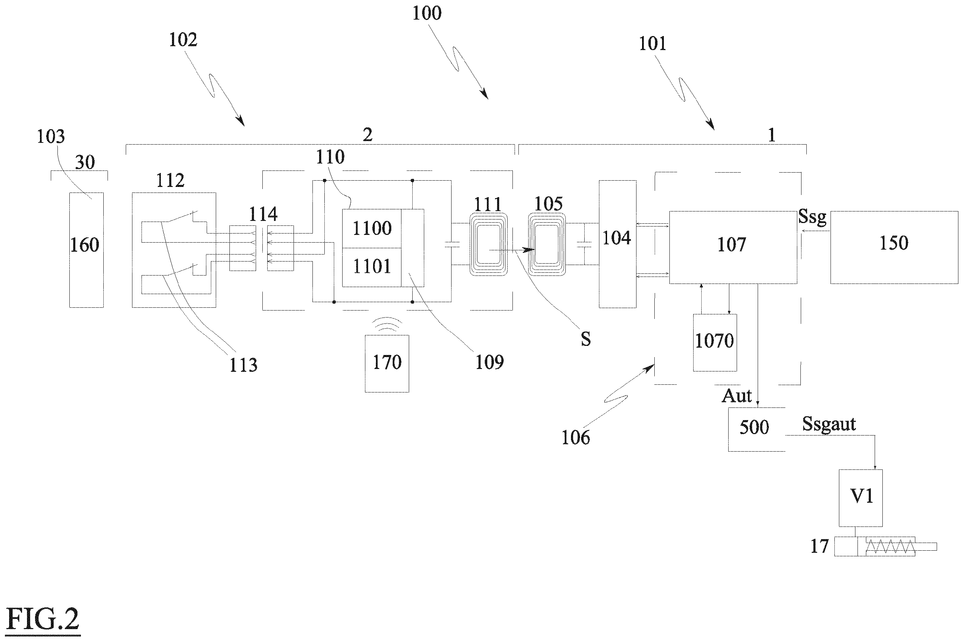

The means 103 of the embodiment of the invention visible in Figure 2, are configured to allow or prevent the activation of the second module 102, that is, the enabling of the operation of the second module 102.

The second module 102, once activated, is adapted to release at least one safety signal S, to the first module 101, at the request of the first module 101, to allow the decoupling of the tool 6 from the robot arm 5 or the coupling between tool 6 and robotic arm 5, in particular from the robot adapter 1, as better visible in Figure 2 where a safety control apparatus for tool changing device of a robotic arm is shown in accordance with an embodiment of the present invention.

Preferably, the first module 101, which receives the power supply from the robot, transmits energy wirelessly, preferably by radio frequency, to the second module 102 associated with the tool 6 for supplying the module 102.

This solution eliminates the wear and tear on the coupling means of the systems known and used to date, and the need for maintenance.

Preferably, the first module 101 comprises a reader 104, for example an RFID reader, and a specially designed antenna 105.

The reader 104 is preferably connected to a control circuit 106 comprising at least one data processing unit 107, for example a microprocessor 107, which manages the reader 104 and processes the signals received from the reader itself. The control circuit 106 also comprises a non-volatile memory 1070, for example an EEPROM memory, associated with the processing unit 107; preferably the memory 1070 is internal to the microprocessor 107. Preferably, in order to meet international safety standards in the field of robotics, such as ISO/IEC 10218-2 for robot integration, the control circuit 106 comprises at least two independent microprocessors with a voting system 1002 (one-out-of-two-1002-voting), to improve the reliability of the safety control. Different microprocessor solutions are also possible (e.g. a single chip with two CPUs or FPGAs); the two microprocessors are both associated with respective memories. The two microprocessors monitor each other and compare the result of their processing to authorise the actuation of the tool changer, i.e. the decoupling of tool 6 from the robot arm 5. The control circuit 106 may belong to the first module 101 and be separate from the control unit 150 or it may be integrated into the control unit 150 so as to realise a single control logic unit 106, 150.

The second module 102 associated with the tool 6 preferably comprises a chip 109, e.g. an RFID chip, provided with a non-volatile memory 110, e.g. of the EEPROM type, i.e. a memory configured to store data that must be kept when the power supply is switched off. The memory 110 can be written to and deleted by means of special procedures.

The safety signal S comprises at least one safety code Saut, i.e. a numerical or alphanumeric string stored in the memory 110, in the form of a certain number of bytes, preferably read and write password protected and preferably encrypted; the safety code is written in a designated memory area of the memory 110.

The RFID chip 109 of the second module 102 preferably contains in the memory 110 a unique identification code UID, consisting of a certain number of bits (64, for example, in the RF ISO/IEC 15693 standard), which constitutes the identification code of the RFID chip. The safety signal S preferably comprises the unique identification code UID.

Preferably, the memory 110 contains other identification data, such as a byte in the RF ISO/IEC 15693 standard to identify the proprietary application (AFI code or Application Family Identifier), and other data chosen by the module manufacturer 102 with a number of freely selectable bits as needed.

Specifically, for the tool changer control application, one or more numerical codes, each in the form of a certain number of bytes, read and write password-protected and encrypted, written to a designated memory area(s), are stored in memory 110.

The safety signal S preferably also comprises the above-mentioned identification data, such as the AFI code and other numerical codes stored in the memory 110.

Preferably, the same numerical codes present in the memory 110 are also present in the memory 1070 of the processing unit 107 or in the memories associated with the microprocessors in the event that the control circuit 106 comprises more than one microprocessor.

The codes are transmitted by the device 102 in a redundant manner, preferably with a control bit string for cyclic redundancy control (CRC) to avoid communication errors due to environmental electromagnetic interferences.

The second module 102 comprises an antenna 111 configured to transmit the at least one safety signal S comprising the at least one safety code Saut and preferably the unique identification code UID; preferably the safety signal S also comprises other codes contained in the memory 110. The antenna 111 is preferably an antenna deposited on a suitable substrate and connected to the chip 109.

The chip 109 is connected to at least one magnetic sensor 112 provided with at least one electrical switch 113; the magnetic sensor is activated by a magnetic actuator 160 in the means 103. Preferably, the magnetic sensor 112 is connected to the chip 109 via a cable and a coupling with male-female connector 114 of the four-wire type. In particular, a magnetic sensor 112, preferably of the reed type, which does not require power supply to signal the presence of a magnetic actuator in the vicinity of the sensor, was chosen. According to a variant of this embodiment of the invention, the magnetic actuator 160 can be encoded.

The reed magnetic sensor 112 is preferably arranged on the support 7 stably connected to the tool adapter 2; the support 7 in turn couples to the parking station 30 to deposit the tool 6. The magnetic actuator 160 is arranged in the parking station 30 such that when the tool 6 is deposited in the parking station 30, the magnetic actuator 160 is aligned in front of the magnetic sensor 112, so that the magnetic sensor 112 can be activated. In particular, if the magnetic actuator 160 is within a given distance D from the magnetic sensor 112, of a few millimetres but which depends on the type of sensor, e.g. of 2 or 3 millimetres, it can activate the magnetic sensor 112.

Depending on the presence or absence of the tool 6, and in particular of the tool adapter 2 in the parking station 30, the magnetic sensor 112 will allow or prevent the activation of the chip 109; this results in the transmission or not of the at least one safety signal S to the first module 101, in particular to the reader 104.

In particular, the magnetic sensor 112 will selectively activate the at least one normally open or closed switch 113.

If the switch 113 in parallel with the antenna 111 were closed, the antenna would be shortcircuited and could not physically transmit any signal of the chip 109 to the reader 104.

If the switch 113 in parallel with the antenna 111 were open, the antenna could transmit a signal to the reader.

In the case of normally closed switch 113, the chip 109 will be arranged in parallel with the antenna 111 and so will the antenna itself.

In the case of a normally open switch 113, the chip 109 and the antenna 111 will be arranged in series with each other and with the switch 113.

The default circuit configuration of the module 102 is that the antenna 111 is shortcircuited by the electrical contacts 113 of the magnetic sensor 112 and therefore cannot transmit.

Typically, in safety applications a magnetic sensor 112 with two switches 113 is used to ensure that the failure of a single switch does not affect the safety of the system.

In accordance with a variant of the embodiment of the invention it is possible to use two sensors 112 with single or double switch.

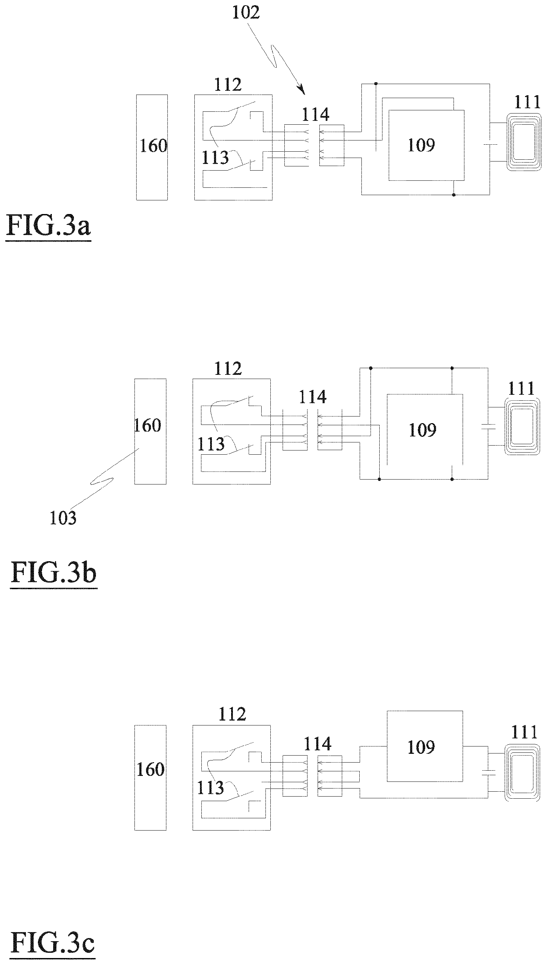

Figures 2 and 3b show the case of a reed magnetic sensor 112 with two normally closed switches 113.

It is also possible to use a sensor 112 with a normally open switch 113 and a normally closed switch 113 (Figure 3a) or a sensor with two normally open switches 113 (Figure 3c).

When the robotic arm 5, in particular the robot adapter 1, has to operate the decoupling of the tool 6 or the coupling with the tool 6, the control unit 150 of the robotic arm 5 or of the manipulator (not visible in the figures), activates by means of the command Ssg, the first module 101 and in particular the reader 104 of the first module. Preferably when the reader 104 is within the given distance D1 from the tool 6, in particular from the tool adapter 2 and from the second module 102, for example comprised between 2mm and 60mm, it transmits energy by radio frequency by means of its antenna 105 to the second module 102.

Only when the magnetic actuator 160 of the means 103 arranged in the parking station 30 is aligned in front of the magnetic sensor 112, in particular within the distance D from it, the two switches 113 of the magnetic sensor 112 are activated by the magnetic actuator 160 and configure the circuit of the second module so that the chip 109 and the antenna 111 are activated, i.e. are enabled to operate.

If the above conditions are met, the chip 109 is activated and the reader 104 of the first module queries the RFID chip 109 to read the designated memory area(s).

The safety signal S is transmitted from the chip 109 of the second module 102 via the antenna 111 to the first module 101 so that the reader 104 can read it.

Preferably, the second module 102 is adapted to transmit the at least one safety signal S when the first module 101 is arranged at a distance less than or equal to the distance D1 from said second module.

Preferably, the reader 104 of the first module transmits with the safety signal S, the safety code Saut and preferably, if they are present in the memory 110, the code UID and the other numerical codes present, to the at least one processing unit 107 to perform an operation of verifying the match with the code(s) stored in the at least one memory 1070; if there is a match between the code(s) sent and the code(s) stored in the at least one memory 1070, i.e., if the verification operation is positive, the processing unit 107 of the first module 101 sends an authorisation signal Aut to a valve actuating driver 500 (preferably belonging to the first module 101), of the electronic, electromechanical type or of other type, which commands the pneumatic actuating valves V1 positioned on the robotic arm 5 or integrally with the robot adapter 1 to allow the operation of decoupling the tool 6 from the robotic arm 5 or of coupling the robotic arm 5 with the tool 6.

However, it is also possible that the processing unit 107 of the first module 101 sends an authorisation signal Aut to the driver 500 to allow the operation of decoupling the tool 6 from the robotic arm 5 even without carrying out the verification operation, i.e. upon the arrival of the signal S to the first module 101.

Once the authorisation signal Aut has arrived, the valve actuating driver 500 sends the command Ssgaut to the pneumatic actuation valves V1, positioned on the robotic arm 5 or integrally with the robot adapter 1; the aforesaid pneumatic actuation valves V1 act on the pneumatic cylinder 17 for decoupling the tool 6 from the robotic arm 5, in particular for decoupling the robot adapter 1 from the tool adapter 2, or for coupling the robotic arm 5 with the tool 6 .

As already mentioned above it is also possible that the control circuit 106, which is normally separated from the control unit 150, is not separated from the control unit 150 but belongs to the same unit 150 so that the robotic arm 5 has a single logic control unit 150, 106.

Preferably, each microprocessor has a pair of numerical codes stored in its own dedicated memory area. Each microprocessor will compare the pair of data read by the reader 104 with the pair of data stored in its memory and will give its consent only if the data checked preferably with checksum will match.

Preferably, the at least one processing unit 107 could also store the code UID of the chip 109 during the step of coupling the tool adapter 2 and compare it with the one read at the time of decoupling, for example the code UID which reads by the chip 109 when the processing unit 107 itself receives the signal Ssg or, always preferably, at periodic time intervals during the whole coupling time of the robotic side of the tool changer to the tool side.. This allows to avoid interferences with any other RFID chips present in the working environment.

The code of the AFI application family can also be used for this purpose.

In the case where the first module 101 comprises two microprocessors 107, only if both microprocessors give their consent simultaneously (or within a reasonable timeframe of the order of milliseconds), the control circuit 106 of the first module 101 will authorise with the signal Aut the operation of decoupling the tool 2 from the robotic arm 5 or the coupling thereof.

If the tool adapter 2 is not properly positioned in the parking station 30, the magnetic sensor 112 is not activated by the magnetic actuator 160, the switches 113 remain in the default position and do not configure the second module 102 such that the antenna 111 is able to transmit the given signal S and the chip 109 is activated.

If the tool adaptor 2 is suitably positioned in the parking station 30 while the robotic arm 5 or the manipulator moves in order to couple the robot adaptor 1 fixed at the end thereof to the tool adaptor 2, the coupling/decoupling unit 120 must be unlocked before the robot adaptor 1 engages the tool adaptor 2.

The safety control system in accordance with the invention allows this operation to be carried out as soon as the robot adapter 1 is at a sufficient distance to energise the antenna 111 of the module 102, which is already enabled to transmit from the magnetic sensor 112 configuring the circuit of the module 102.

The safety control apparatus 100 for the tool changing device has no coupling means in contact between the robot adapter 1 and the tool adapter 2, in particular between the first module 101 associated with the robot adapter 1 and the second module 102 associated with the tool adapter 2.

In addition, one or more codes can be read while the robotic arm 5 or the manipulator approaches the robot adapter 1 to the tool adapter 2 at low speed, without the need for stops and thus without delays in the cycle time.

Depending on the size of the tool changer and thus the distance at which the coupling unit on the robot adapter 1 must be unlocked before engaging the tool adapter 2, the antennas of both the reader 104 and the RFID chip 109 may have different areas, with an extension proportional to the reading distance.

In accordance with a further variant of the embodiment of Figures 1-3, the safety control apparatus 100 can perform an additional function.

In applications where the number of tools exchanged can become considerable, for example the number of tools coupled with the robot is greater than one, the need arises for the user to assign a code with progressive number to the tool in order to be able to distinguish it during the picking step from its parking station (which is also numbered). This also avoids collisions in the working area because each tool must move in the work cell according to a pre-established program and if the robot or the manipulator were to pick up the incorrect tool at a certain machining step, it could bring it with the trajectory designed for another tool into collisions with the machinery present in the cell and/or possibly generate unforeseeable risks.

The code PR with the progressive number must thus be assigned to the tool by the user during the step of initial programming of the robot or of the manipulator.

The code PR is preferably assigned using a binary digital coding with a device, preferably a dip-switch, installed on a communication module associated with the tool 6, in particular arranged on the tool adapter 2.

Preferably, the chip 109 receives write access to a memory area 1101, which is separate from the one 1100 where the safety code Saut, the binary identification code PR which is the progressive number of the tool assigned to it by the user, is written.

The code PR may be written to the memory 1101 of the chip 109 by an external writing device 170 (visible in Figure 2), which for example may also be a mobile phone with an application already available on the Web or designed ad hoc, using a known communication technology, such as NFC technology.

Preferably, the writing of this identification code PR of the tool in the chip 109 is password protected, just as the reading can be protected with the same or another password.

Preferably, the binary identification code PR, will be read by the reader 104 when the tool 2 is coupled and transferred to the processing unit 107 which can communicate it, for example by means of a serial protocol (e.g. IO-Link) or a functional safety communication protocol (for example lO-Link Safety), to the control unit 150 of the robot or of the manipulator for appropriate checks.

Preferably, the safety signal S comprises the binary identification code PR.

The code PR is transmitted to the robotic arm 5, in particular to the robot adapter 1, and thus to the control unit 150 of the robot or of the manipulator, which compares the matching of the code PR with the tool number assigned in the robot or manipulator programme.

In accordance with a further variant of the embodiment of the present invention, as the only difference from the previously described safety control apparatus 100, the second module 102 comprises two chips 190, 191, preferably of RFID type, each with its own antenna 1110, 1111.

The two chips 190, 191 can operate at the same radio frequency or at two different frequencies.

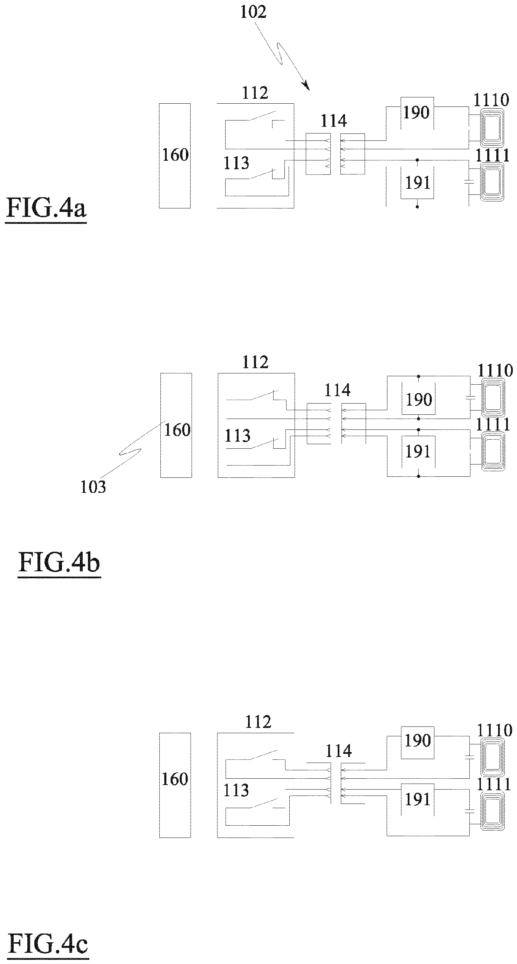

In this case, the connection circuits of the chips 190, 191, of the antennas 1110, 1111 and of the switches 113 are variable, as can be seen in Figures 4a-4c, but they always comply with the condition that in the default state (magnetic sensor 112 not activated by the actuator 160) the antennas 1110, 1111 cannot transmit.

Each chip 190, 191 may contain for simplicity's sake only one safety code Saut, or preferably more safety codes, including also an identification code UID.

The invention thus conceived is susceptible to several modifications and variations, all falling within the scope of the inventive concept.

Preferably the first module 101 is always active and the signal Ssg does not need to be sent for the activation of the safety control apparatus 100.

Preferably the control signal Ssg can be constituted by two control signals.

Preferably the first module 101 includes two readers 104, for example RFID readers, each one provided with its special designed antenna 105 and both connected to the same control circuit 106; to comply with the above mentioned safety standards preferably both the readers 104 are both connected to the two microprocessors of the control circuit 106. Preferably the chip 109 can be of the NFC type.

Preferably, for the above-mentioned safety standards which require redundancy of the prevention measures, the driver 500 comprises at least two independent electronic or electromechanical devices each one receiving the authorisation signal Aut from the processing unit 107 and that generate one or more signals Ssgaut for the pneumatic actuating valves V1.

For example, in a variant of the above embodiments, the driver 500 comprises two independent electronic or electromechanical devices each one controlled by the authorisation signal Aut deriving from one of two microprocessors.

For example, in another variant of the above embodiments, the control signal Ssg deriving from the control unit 150 of the robotic arm or the manipulator is sent to the actuating valve driver 500 instead that to the processing unit 107. The same driver receives even the authorisation signal Aut from the processing unit 107 and only when simultaneously the control signal Ssg and the authorisation signal Aut are received by the driver 500, the driver 500 itself controls the pneumatic valves V1.

For example, in the case of the embodiment of above which provides the use of two electric switches, when one switch of the driver 500 is closed by means of the authorisation signal Aut deriving from one microprocessor, the switch allows the passage of the control signal Ssg to one of two pneumatic valves by activating the same valve for decoupling the tool changer. Moreover, all details can be replaced by other technically equivalent elements.

In practice, the materials used, as well as the contingent shapes and sizes, can be whatever according to the requirements without for this reason departing from the scope of protection of the following claims.

## Claims

1. Safety control apparatus (100) for a tool changing device of a robotic arm, said apparatus being configured to allow the decoupling or the coupling between robotic arm (5) and tool (6) safely, **characterized in that** it comprises:
- a first module (101) associated with the robotic arm,
- a second module (102) associated with the tool and comprising storage means (110) in which at least one safety signal (S, UID, PR) is stored,
- means (103) associated with a tool parking station (30) adapted to prevent or allow the activation of said second module, said second module, once activated, being configured to wirelessly transmit said at least one safety signal to the first module, said first module being configured to allow the decoupling or the coupling between robotic arm and tool in response to the reception of said at least one safety signal.

2. Apparatus according to claim 1, **characterized in that** said at least one safety signal comprises a safety code in the form of a numerical or alphanumeric string (Saut).

3. Apparatus according to claim 2, **characterized in that** said storage means (1101) of said second module are configured to store at least one code (PR) with progressive number assigned to the tool, said at least one safety signal (S) transmittable from said second module, once activated, to said first module wirelessly comprising said at least one code with progressive number assigned to the tool.

4. Apparatus according to claim 3, **characterized in that** said at least one code (PR) with progressive number assigned to the tool is entered into said storage means by a user via an external communication module (170).

5. Apparatus according to any one of the preceding claims, **characterized in that** it comprises a control circuit (106, 150) associated with said first module, said control circuit (106) comprising a memory (1070) in which said at least one safety signal is stored, said control circuit being configured to carry out an operation of verifying the match of said at least one safety signal (S) coming from said second module and received from the first module with the at least one safety signal present in said memory of said control circuit (106, 150) and being configured to allow the decoupling or the coupling between robotic arm and tool after carrying out said verification operation and if said verification operation is positive.

6. Apparatus according to any one of the preceding claims, **characterized in that** said means (103) associated with the parking station comprise a magnetic actuator (160) and said second module comprises a magnetic sensor (112) activatable by said magnetic actuator.

7. Apparatus according to claim 6, **characterized in that** said magnetic sensor comprises at least one electrical switch (113) commanded by said magnetic actuator to allow or prevent the activation of said second module.

8. Apparatus according to any one of the preceding claims, **characterized in that** said first module comprises an RFID reader (104) and said second module comprises at least one RFID chip (109) with associated memory containing said at least one safety signal.

9. Tool changing device for a robotic arm comprising a safety control apparatus (100) defined as in any one of the preceding claims.

10. Tool changing device according to claim 9, **characterized in that** it comprises a robot adapter (1) adapted to be connected with said robotic arm (5) and a tool adapter (2) adapted to be connected with said tool (6), said first module (101) being arranged in said robot adapter and said second module (102) being arranged in said tool adapter.

11. Apparatus according to claim 7, **characterized in that** said second module (102) comprises at least one chip (109) with associated memory storing said at least one safety signal and at least one antenna (110) connected to the chip by means of said at least one electric switch (113) of said magnetic sensor (112), said magnetic actuator (160) being configurated to control said at least one electric switch (113) of said magnetic sensor (112) to short-circuit or not the antenna of said second module.
